# EUROPEAN PATENT APPLICATION

(11) **EP 3 960 520 A1**
(43) Date of publication of application: **02.03.2022**
(21) Application number: 20192903.1
(22) Date of filing: 26.08.2020
(51) Int. Cl.: B60L 1/00, B60L 50/10, B60L 50/50

(54) **VEHICLE ENERGY STORAGE**

(71) Applicant: Armleder, Sebastien, 1227 Carouge (CH)
(72) Inventor: Armleder, Sebastien, 1227 Carouge (CH)
(74) Representative: Stellbrink & Partner Patentanwälte mbB

(57) **Abstract**

A set is disclosed. The set is configured for configured to be mounted to a vehicle. The set comprises a first converter, a first rechargeable battery and a power transmission element. The set is configured to be connected to a vehicle onboard power network. The first converter is configured for providing power from the first battery to the onboard power network. The power transmission element is configured to connect the first converter and the vehicle onboard power network and for inhibiting a power flow from the vehicle onboard power network to the first battery. Further, a motor vehicle is disclosed. The motor vehicle comprises a combustion engine configured to generate mechanical power, an alternator configured to convert at least a part of the mechanical power generated by the combustion engine to electric power and a vehicle onboard power network. The motor vehicle further comprises electrically powered components, a second rechargeable battery and the set. The vehicle onboard power network is not configured for providing power for an electric motor configured for propulsion of the vehicle. Also, a method for adapting a motor vehicle is disclosed. The method comprises mounting a set to the motor vehicle.

## Description

The present invention relates to the field of motor vehicles and electric systems of motor vehicles. It may particularly relate to motor vehicles comprising a combustion engine.

US 2011/0202234 A1 discloses a vehicle including a drive train having a manual transmission. An internal combustion engine is coupled to the manual transmission via a clutch. Auxiliary devices operate auxiliary systems of the vehicle. A battery energizes electric drivers for the auxiliary devices. A power exchange unit is coupled to the manual transmission via a power takeoff port. An electric generator is coupled to the power exchange unit, and the internal combustion engine drives the generator via the power exchange unit. The battery is energized by the generator via a battery charger.

Further, US 2011/0202234 A1 teaches an added battery and optionally added generator. The generator is coupled to the internal combustion engine and charges the added battery. The added battery then powers the electrified auxiliary devices, which may provide for an increased fuel efficiency of the vehicle, e.g. by allowing to switch off the engine when the vehicle is stationary.

US 2015/0069829 A1 teaches a battery module for use in a vehicle. The battery module may include a housing, a plurality of battery cells disposed within the housing, and solid state pre-charge control circuitry that pre-charges a direct current (DC) bus that may be coupled between the battery module and an electronic component of the vehicle. Furthermore, the solid state pre-charge control circuitry may include solid state electronic components as well as passive electronic components.

US 2015/0069829 A1 further teaches using the battery module for hybrid electric vehicles, which use electric power for all or a portion of their propulsion. Particularly, in case of a micro hybrid electric vehicle (mHEV), the battery module may power accessories during a stop of the internal combustion engine. The battery module may provide power converted to a voltage level of the onboard power network of the vehicle for powering ignition and auxiliary devices. The battery pack is charged for example by a belt-alternator starter in case of the mHEV or by a starter-generator.

US 2011/0133920 A1 teaches realizing fuel savings and reducing greenhouse gas of a motor vehicle, particularly a mass transit vehicle, by moving some of the load of generating electricity for the vehicle's systems to different times in a vehicle's operation. During periods of heavy engine load (e.g., acceleration and hill-climbing), electrical generation may be reduced. During periods of light load, braking, hill-descending and other conversions of kinetic energy to heat, electrical generation may be increased.

Some of the mechanics taught by US 2011/0133920 A1 are specific to heavy vehicles, such as mass transit vehicles, since they do particularly relate to the control schemes and particularities of their operation. Further, the electric energy needed to operate the vehicle is provided by a generator coupled to the internal combustion engine of the motor vehicle.

EP 3 498 511 A1 and US 2019/263449 A1 teach kits for retrofitting conventional vehicles, i.e. vehicles initially propelled by an internal combustion engine, to electric vehicles. Both EP 3 498 511 A1 and US 2019/263449 A1 teach removing the internal combustion engine and replacing it with an electric motor. Propulsion energy is provided by battery packs.

While the prior art approaches may be satisfactory in some regards, they have certain shortcomings and disadvantages.

Both US 2011/0202234 A1 and US 2015/0069829 A1 teach powering the auxiliary devices by power generated by a generator coupled to the internal combustion engine. In other words, the electric power to run the auxiliary devices is generated by burning fuel by the internal combustion engine of the car. Internal combustion engines are known to have a limited efficiency.

The solutions proposed by EP 3 498 511 A1 and US 2019/263449 A1 both require electric motors sufficiently powerful to move the vehicles, replacement of significant built-in parts and battery packs with a sufficient energy content to move the vehicle over a reasonable distance. Such battery packs will therefore have a certain size and require considerable manufacturing efforts.

It is therefore an object of the invention to overcome or at least alleviate the shortcomings and disadvantages of the prior art. More particularly, it is an object of the present invention to provide an improved motor vehicle, as well as a set and a method for improving the motor vehicle.

It is an optional objective of the current invention to provide a motor vehicle with a reduced fuel consumption as well as a set and a method for reducing the fuel consumption and/or emission of the motor vehicle.

It is another optional objective of the current invention to provide a set and a method for reducing a fuel consumption motor vehicle with limited technical efforts, as well as a corresponding motor vehicle.

In a first embodiment, the present invention relates to a set. The set is configured to be mounted to a vehicle. The set comprises a first converter and a first rechargeable battery.

The converter may be a power converter. The power converter may be configured for changing a voltage of provided power.

The power converter may be a step-down converter. This may be optionally advantageous, as a step-down converter may be technically less complex than other converter types.The set may be configured to be connected to a vehicle onboard power network. The vehicle onboard power network may be a power network of a motor vehicle. The first converter may be configured for providing power from the first battery to the onboard power network.

Even though the set may be connected to the onboard power network of the motor vehicle, it is not considered a part of the onboard power network of the motor vehicle in this disclosure. For example, the set may comprise another nominal or operating voltage than the onboard power network.

The first converter may be configured to provide power to the vehicle onboard power network at a voltage higher than a current voltage of the vehicle onboard power network. The current voltage of the vehicle onboard power network may for example be a voltage present in the onboard power network. The current voltage of the vehicle onboard power network may also be a current voltage of a battery of the vehicle onboard power network, such as a starter battery. However, there may be operation points where the first converter may not provide power to the onboard power network.

The first battery may comprise a first battery nominal voltage. The first battery nominal voltage may be higher than a nominal voltage of the vehicle onboard power network. Preferably, the first battery nominal voltage may be at least twice as high as the nominal voltage of the vehicle onboard power network. This may be optionally advantageous, since the first converter may in this case be a down-converter.

The set may comprise a power transmission element configured to connect the first converter and the vehicle onboard power network.

The power transmission element may be configured for inhibiting a power flow from the vehicle onboard power network to the first battery.

The power transmission element may comprise a high-capacity diode.

The high-capacity diode may comprise a maximum forward continuous current of at least 100 A, preferably at least 300 A, and still more preferably at least 500 A. This may be optionally advantageous, as it allows providing an amount of power at a voltage of current onboard power networks (12 V to 14 V) that is sufficient for typical electrical consumers.

The power transmission element may comprise a contactor. The contactor may be configured for disconnecting the alternator from the vehicle onboard power network. The alternator may be configured for connecting the first battery to the onboard power network. For example, the contact may be a 1NO+1NC DC contactor. In other words, the contactor may comprise a normally open (NO) and a normally closed (NC) portion. For example, the contactor may normally, that is without any input, be configured for connecting the alternator and the vehicle onboard power grid, and for not connecting the first battery and the onboard power grid.

The contactor may comprise a maximum continuous current of at least 100 A, preferably at least 300 A, and still more preferably at least 500 A.

The person skilled in the art will easily understand that the power transmission element may also be implemented by other electronic components, such as by means of power electronics.

The power transmission element may be configured for allowing a power flow from the first battery, preferably from the first converter, to the vehicle onboard power network.

The first battery may be a lithium-ion battery.

The first battery may be a high capacity battery.

The first battery may be configured for being charged with electric energy from a power grid. The power grid may be a stationary power grid.

The set may comprise a connector configured for connecting the set to a power grid connector. The connector of the set may for example be a plug for being plugged into a corresponding socket connected to the power grid, or a socket for accepting a corresponding power plug connected to the grid.

The first battery may be configured for being charged only with energy provided by means of the power grid connector.

The first battery may comprise a battery capacity. The battery capacity of the first battery may be higher than 250 Ah, preferably higher than 500 Ah, and still more preferably higher than 750 Ah.

The first battery may comprise a nominal voltage. The nominal voltage may be at least 15 V, preferably at least 24 V, and still more preferably at least 48 V.

The first battery may comprise an energy content of at least 6 kWh, preferably at least 12 kWh, and still more preferably at least 24 kWh.

The first converter may be configured for providing a power of not more than 5 kW, preferably not more than 3 kW, and still more preferably not more than 1.5 kW.

The first battery may be configured for providing power to electrically powered components connected to the vehicle onboard power network. The electrically powered components may comprise at least one of lights, a head unit, a starter motor and an ignition system.

The set may comprise a microcontroller. The microcontroller may be configured for controlling the first converter based on at least one of a voltage of the vehicle onboard power network and a voltage of the first battery. This may be optionally advantageous, as thus, a damage to the first battery, e.g. due to excessive discharge, and/or a damage to the onboard power network, e.g. due to excessive voltages or voltage peaks, may be avoided.

In a second embodiment, the present invention relates to a motor vehicle. The motor vehicle comprises a combustion engine configured to generate mechanical power. The combustion engine may be an internal combustion engine.

The motor vehicle further comprises an alternator. The alternator is configured to convert at least a part of the mechanical power generated by the combustion engine to electric power.

The vehicle further comprises a vehicle onboard power network, electrically powered components and a second rechargeable battery.

The motor vehicle further comprises the set as discussed above.

The motor vehicle may further comprise a second converter. The second converter may be configured to convert the electric power provided by the alternator. The onboard power network may electrically connect the second converter, the second battery and the electrically powered components. The onboard power network may also comprise a connection to the set.

The capacity of the first battery may be at least two times higher, preferably at least ten times higher than a capacity of the second battery. This may be optionally advantageous as it allows using a simple converter, such as a step-down converter.

The energy content of the first battery may be at least two times higher, preferably at least ten times higher and still more preferably at least twenty times higher than an energy content of the second battery.

The nominal voltage of the first battery may be at least two times higher, preferably 3.5 times higher and still more preferably 8 times higher than a nominal voltage of the second battery.

The vehicle onboard power network may not be configured for providing power for an electric motor configured for propulsion of the vehicle. The electric motor for propulsion of the vehicle is intended to refer to a motor providing mechanical power that is at least partially used for propulsion of the vehicle, as in a case of a belt hybrid electric vehicle or a power-split hybrid power train comprising an electric section. However, the term "electric motor for propulsion of the vehicle" is not intended to refer to a motor providing power for controlling a power train, such as an electric actuator for a clutch or a gear shift system, an electric steering system, a braking system, or the like.

The vehicle may not comprise an electric motor configured for propulsion of the vehicle.

The electrically powered components may comprise at least one of lights, a head unit, a starter motor and an ignition system.

The vehicle onboard power network may not be configured for providing power to the first battery. However, the vehicle onboard power network may be configured for providing power to a battery management system of the first battery, as long as this power is not used for charging the first battery. The person skilled in the art will understand that parasitic currents may occur however.

The power transmission element of the set may be configured for inhibiting a power flow from the second battery to the first battery.

The first converter may be configured for providing power to the vehicle onboard power network at a voltage higher than a voltage at which the second converter provides power to the vehicle power onboard network.

The motor vehicle may be configured for transporting at least one human operator.

The motor vehicle may be configured for road traffic.

The motor vehicle may be a passenger car.

The first battery may be mounted in a rear portion of the vehicle, such as in a trunk of the vehicle.

The motor vehicle may comprise a mechanical gearbox.

The motor vehicle may comprise a maximal mass of at most 3.5 tons, preferably at most 3 tons, and still more preferably at most 2.7 tons. In other words, the motor vehicle may comprise a maximal mass of not more than 3.5 tons, preferably not more than 3 tons, and still more preferably not more than 2.7 tons.

The motor vehicle may comprise a maximal interior volume of at most 14 m³, preferably at most 10 m³, and still more preferably at most 6 m³.

The electrically powered components may not be configured for cooling cargo below 10°C.

The motor vehicle may not be a truck.

The set may be configured to be mounted to a motor vehicle with a non-hybrid power train so as to obtain a vehicle according to the above description.

The set may be a set for retrofitting a motor vehicle propelled by energy from an internal combustion engine. In other words, the set may be a set for retrofitting a conventional motor vehicle.

The microcontroller may be configured for controlling the first converter based on a power consumption of the electrically powered components connected to the onboard power network. An optional advantage may be that a power provided by the second battery can be controlled.

The microcontroller may be configured for controlling the first converter based on at least one of a current voltage and a state of charge of the second rechargeable battery. An optional advantage may be that a state of charge of the second rechargeable battery may be controlled, e.g. so as to always maintain an acceptable state of charge to start the engine.

In a third embodiment, the present invention relates to a method for adapting a motor vehicle. The method comprises mounting a set according to the above description to the motor vehicle.

The method may comprise connecting the set to the vehicle onboard power network.

The motor vehicle may initially, i.e. before the method is performed, comprise
a combustion engine configured to generate mechanical power,
an alternator configured to convert at least a part of the mechanical power of the combustion engine to electric power,
a vehicle onboard power network,
electrically powered components, and
a second battery.

The method may not comprise removing and/or replacing the second battery of the motor vehicle. In other words, the method may comprise keeping the starter battery of the vehicle in place.

The method may not comprise removing and/or replacing the alternator of the motor vehicle.

The following numbered embodiments also define the invention.

Below, embodiments of a set will be discussed. The set embodiments are abbreviated by the letter "S" followed by a number. Whenever reference is herein made to the "set embodiments", these embodiments are meant.
S1. A set configured to be mounted to a vehicle, wherein the set comprises a first converter (62) and a first rechargeable battery (60).
S2. The set according to the preceding embodiment, wherein the set is configured to be connected to a vehicle onboard power network (30), and wherein the first converter (62) is configured for providing power from the first battery (60) to the onboard power network (30).
S3. The set according to the preceding embodiment, wherein the first converter (62) is configured to provide power to the vehicle onboard power network at a voltage higher than a current voltage of the vehicle onboard power network.
S4. The set according to any of the two preceding embodiments, wherein the first battery (60) comprises a first battery nominal voltage, and wherein the first battery nominal voltage is higher than a nominal voltage of the vehicle onboard power network, preferably at least twice as high as the nominal voltage of the vehicle onboard power network.
S5. The set according to any of the preceding embodiments and with the features of S2, wherein the set comprises a power transmission element configured to connect the first converter (62) and the vehicle onboard power network (30).
S6. The set according to the preceding embodiment, wherein the power transmission element is configured for inhibiting a power flow from the vehicle onboard power network (30) to the first battery (60).
S7. The set according to any of the two preceding embodiments, wherein the power transmission element comprises a high-capacity diode (64).
S8. The set according to the preceding embodiment, wherein the high-capacity diode (64) comprises a maximum forward continuous current of at least 100 A, preferably at least 300 A, and still more preferably at least 500 A.
S9. The set according to any of the preceding embodiments with the features of S6, wherein the power transmission element comprises a contactor.
S10. The sec according to the preceding embodiment, wherein the contactor comprises a maximum continuous current of at least 100 A, preferably at least 300 A, and still more preferably at least 500 A.
S11. The set according to any of the six preceding embodiments, wherein the power transmission element is configured for allowing a power flow from the first battery (60), preferably from the first converter (62), to the vehicle onboard power network (30).
S12. The set according to any of the preceding embodiments, wherein the first battery (60) is a lithium-ion battery.
S13. The set according to any of the preceding embodiments, wherein the first battery (60) is a high capacity battery.
S14. The set according to any of the preceding embodiments, wherein the first battery (60) is configured for being charged with electric energy from a power grid.
S15. The set according to the preceding embodiment, wherein the set comprises a connector configured for connecting the set to a power grid connector.
S16. The set according to the preceding embodiment, wherein the first battery (60) is configured for being charged only with energy provided by means of the power grid connector.
S17. The set according to any of the preceding embodiments, wherein the first battery (60) comprises a battery capacity, and wherein the battery capacity is higher than 250 Ah, preferably higher than 500 Ah, and still more preferably higher than 750 Ah.
S18. The set according to any of the preceding embodiments, wherein the first battery (60) comprises a nominal voltage, and wherein the nominal voltage is at least 15V, preferably at least 24 V, and still more preferably at least 48 V.
S19. The set according to any of the preceding embodiments, wherein the first battery (60) comprises an energy content of at least 6 kWh, preferably at least 12 kWh, and still more preferably at least 24 kWh.
S20. The set according to any of the preceding embodiments, wherein the first converter is configured for providing a power of not more than 5 kW, preferably not more than 3 kW, and still more preferably not more than 1.5 kW.
S21. The set according to any of the preceding embodiments and with the features of S2, wherein the first battery (60) is configured for providing power to electrically powered components (40, 40', 40") connected to the vehicle onboard power network (30).
S22. The set according to any of the preceding embodiments and with the features of S2, wherein the set comprises a microcontroller, and wherein the microcontroller is configured for controlling the first converter based on at least one of a voltage of the vehicle onboard power network and a voltage of the first battery.

Below, embodiments of a vehicle will be discussed. The vehicle embodiments are abbreviated by the letter "V" followed by a number. Whenever reference is herein made to the "vehicle embodiments", these embodiments are meant.
V1. A motor vehicle comprising
   a combustion engine (10) configured to generate mechanical power,
   an alternator (20) configured to convert at least a part of the mechanical power generated by the combustion engine (10) to electric power,
   a vehicle onboard power network (30),
   electrically powered components (40, 40', 40"),
   a second rechargeable battery (50), and
   the set according to any of the preceding set embodiments.
V2. The motor vehicle according to the preceding embodiment, wherein the motor vehicle further comprises a second converter (22) configured to convert the electric power provided by the alternator (20), wherein the onboard power network (30) electrically connects the second converter (22), the second battery (50) and the electrically powered components (40, 40', 40").
V3. The motor vehicle according to any of the two preceding embodiments, wherein the capacity of the first battery (60) is at least two times higher, preferably at least ten times higher and still more preferably at least twenty times higher than a capacity of the second battery (50).
V4. The motor vehicle according to any of the preceding vehicle embodiments, wherein the energy content of the first battery (60) is at least two times higher, preferably at least ten times higher than an energy content of the second battery (50).
V5. The motor vehicle according to any of the preceding vehicle embodiments, wherein the voltage of the first battery (60) is at least two times higher, preferably 3.5 times higher and still more preferably 8 times higher than the voltage of the second battery (50).
V6. The motor vehicle according to any of the preceding vehicle embodiments, wherein the vehicle onboard power network (30) is not configured for providing power for an electric motor configured for propulsion of the vehicle.
V7. The motor vehicle according to any of the preceding vehicle embodiments, wherein the vehicle does not comprise an electric motor configured for propulsion of the vehicle.
V8. The motor vehicle according to any of the preceding vehicle embodiments, wherein the electrically powered components (40, 40', 40") comprise at least one of lights, a head unit, a starter motor and an ignition system.
V9. The motor vehicle according to any of the preceding vehicle embodiments, wherein the vehicle onboard power network (30) is not configured for providing power to the first battery (60).
V10. The motor vehicle according to any of the preceding vehicle embodiments, wherein the set comprises the features of S5, and wherein the power transmission element is configured for inhibiting a power flow from the second battery (50) to the first battery (60).
V11. The motor vehicle according to any of the preceding vehicle embodiments with the features of V2, wherein the first converter (62) is configured for providing power to the vehicle onboard power network at a voltage higher than a voltage at which the second converter (22) provides power to the vehicle power onboard network (30).
V12. The motor vehicle according to any of the preceding vehicle embodiments, wherein the vehicle is configured for transporting at least one human operator.
V13. The motor vehicle according to any of the preceding vehicle embodiments, wherein the vehicle is configured for road traffic.
V14. The motor vehicle according to any of the preceding vehicle embodiments, wherein the vehicle is a passenger car.
V15. The motor vehicle according to any of the preceding vehicle embodiments, wherein the first battery (60) is mounted in a rear portion of the vehicle, such as in a trunk of the vehicle.
V16. The motor vehicle according to any of the preceding vehicle embodiments, wherein the motor vehicle comprises a mechanical gearbox.
V17. The motor vehicle according to any of the preceding vehicle embodiments, wherein the motor vehicle comprises a mass of at most 3.5 tons, preferably at most 3 tons, and still more preferably at most 2.7 tons.
V18. The motor vehicle according to any of the preceding vehicle embodiments, wherein the motor vehicle comprises an interior volume of at most 14 m³, preferably at most 10 m³, and still more preferably at most 6 m³.
V19. The motor vehicle according to any of the preceding vehicle embodiments, wherein the electrically powered components are not configured for cooling cargo below 10°C.
V20. The motor vehicle according to any of the preceding vehicle embodiments, wherein the motor vehicle is no truck.
S23. The set according to any of the preceding set embodiments, wherein the set is configured to be mounted to a motor vehicle with a non-hybrid power train so as to obtain a vehicle according to any of the preceding vehicle embodiments.
S24. The set according to any of the preceding set embodiments, wherein the set is a set for retrofitting a motor vehicle propelled by energy from an internal combustion engine.
S25. The set according to any of the preceding embodiments and with the features of S22, wherein the microcontroller is configured for controlling the first converter based on a power consumption of the electrically powered components (40, 40', 40") connected to the onboard power network.
S26. The set according to any of the preceding embodiments and with the features of S22, wherein the microcontroller is configured for controlling the first converter based on at least one of a current voltage and a state of charge of the second rechargeable battery (50).

Below, embodiments of a method will be discussed. The method embodiments are abbreviated by the letter "M" followed by a number. Whenever reference is herein made to the "method embodiments", these embodiments are meant.
M1. A method for adapting a motor vehicle, wherein the method comprises mounting a set according to any of the set embodiments to the motor vehicle.
M2. The method according to the preceding embodiment, wherein the set comprises the features of S2, and wherein the method comprises connecting the set to a vehicle onboard power network (30).
M3. The method according to any of the two preceding embodiments, wherein the motor vehicle initially comprises
   a combustion engine (10) configured to generate mechanical power,
   an alternator (20) configured to convert at least a part of the mechanical power of the combustion engine (10) to electric power,
   a vehicle onboard power network (30),
   electrically powered components (40, 40', 40"), and
   a second battery (50).
M4. The method according to any of the three preceding embodiments, wherein the method does not comprise removing and/or replacing the second battery (50) of the motor vehicle.
M5. The method according to any of the four preceding embodiments, wherein the method does not comprise removing and/or replacing the alternator (20) of the motor vehicle.

Exemplary features of the invention are further detailed in the figures and the below description of the figures.

### Brief description of drawings

Figure 1 shows an electrical architecture of a prior art conventional motor vehicle.
Figure 2 shows an electrical architecture of a conventional motor vehicle equipped with two batteries, according to embodiments of the present invention.
Figure 3 shows an alternative electrical architecture of a conventional motor vehicle equipped with two batteries, according to embodiments of the present invention.

### Detailed description of drawings

For the sake of clarity, some features may only be shown in some figures, and others may be omitted. However, also the omitted features may be present, and the shown and discussed features do not need to be present in all embodiments.

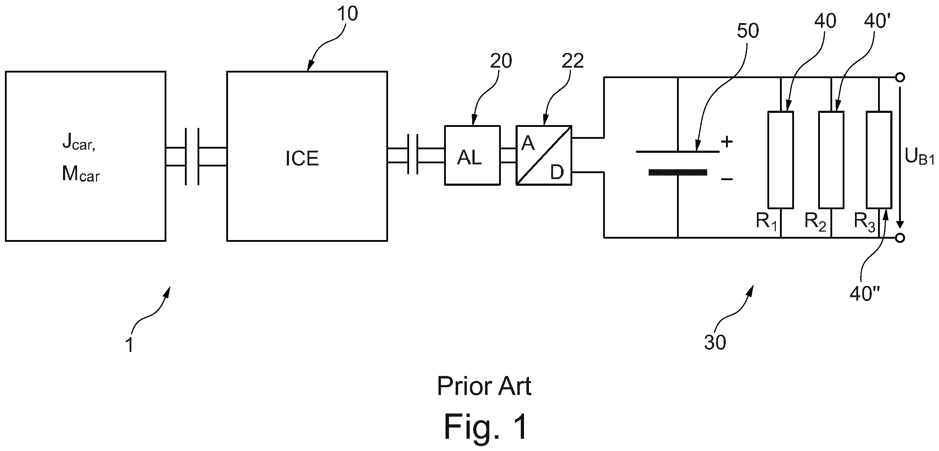

Figure 1 shows the electrical architecture of a prior art conventional motor vehicle 1. The vehicle 1 comprises an internal combustion engine 10. The internal combustion engine generates 10 mechanical power by burning fuel. In modern cars, the mechanical power is used for propelling the car as well as for generation of electrical power for electrically powered components 40, 40', 40" of the vehicle. The electrically powered components 40, 40', 40" comprise for example one or more of an ignition system, a starter motor, a head unit, lights, a horn, an air conditioning system and a central locking system. However, some of these components may also be mechanically powered by the internal combustion engine 10.

The electrical power is typically generated by an alternator 20, which is powered by the internal combustion engine 10. The electrical energy generated by the alternator 20 is converted by a converter 22 to a voltage level of an onboard power network 30 of the vehicle. The onboard power network 30 connects a starter battery 50 of the vehicle to the electrically powered components 40, 40', 40".

The starter battery 50 of the vehicle is typically a rechargeable battery. Often, lead-acid batteries are used for this purpose. An energy density of lead-acid batteries is indicated to amount to 35-40 Wh/kg by May, Geoffrey J., Alistair Davidson, and Boris Monahov. "Lead batteries for utility energy storage: A review." Journal of Energy Storage 15 (2018): 145-157.

By powering said components electrically, considerable savings in fuel consumption were realized. However, as a consequence, in modern cars, 15-20% of the energy generated by the internal combustion engine is used for powering these electrically powered components 40, 40', 40". Thus, a significant amount of fuel is burned for power generation of the electrical components. Consequently, a significant part of emissions of the motor vehicle is caused due to the necessity of generation of electrical power.

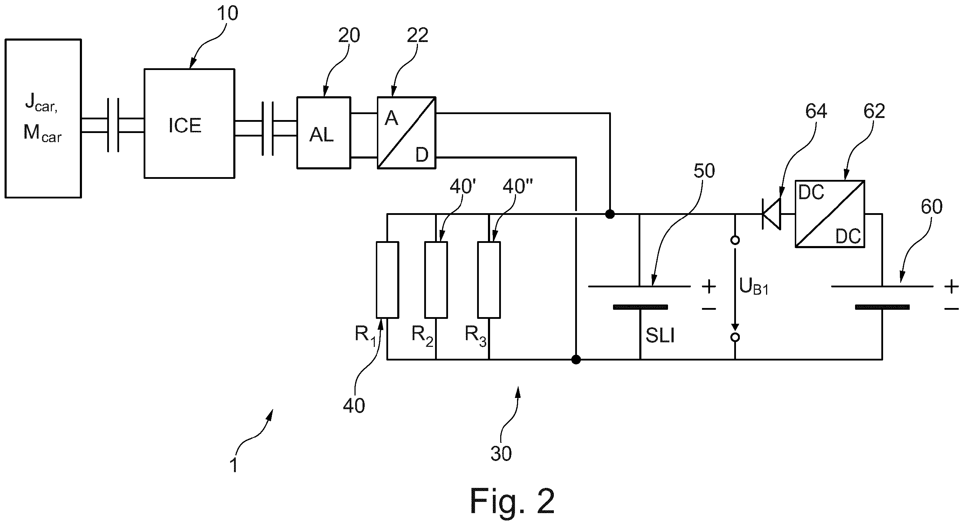

Figure 2 shows an electrical architecture of the conventional motor vehicle equipped with two rechargeable batteries, according to embodiments of the present invention.

It is to be noted that the term "conventional" is intended to refer to a motor vehicle propelled by an internal combustion engine and not by an electric motor.

The motor vehicle in Fig. 2 comprises a first battery 60 in addition to the starter battery 50. The starter battery will also be referred to as second battery 50 in the present disclosure.

The second battery 50 may be charged by the alternator 20 and the converter connected to the alternator 20 as described with reference to Fig. 1. In this disclosure, the converter connected to the alternator is referred to as second converter 22. As in Fig. 1, the onboard power network 30 may connect the second battery 50, the second converter 22 and the electrically powered components 40, 40', 40".

The first battery 60 is also connected to the onboard power network 30 of the motor vehicle 1. The connection comprises a first converter 62. The first converter 62 may convert the power provided by the first battery 60 so as to be at a voltage level above the voltage at which the second converter 22 provides the power from the alternator 20 to the onboard power network 30. The voltage level of the power provided by the first converter 60 may be only slightly above the voltage level of the power provided by the second converter 22, e.g. 14.65 V and 14.5 V respectively, so as to not damage the onboard power network 30 or the components 40, 40', 40" connected to it.

This may be optionally advantageous, as it allows to power the electrically powered components 40, 40', 40" by the first battery 60. Thus, the electrical power necessary for powering these components does not need to be generated by the internal combustion engine 10. Hence, fuel savings may be realized, leading to a reduced amount of emissions.

Furthermore, between the first battery 60 and the onboard power network 30, particularly between the first converter 62 and the onboard power network 30, there may be a power transmission element inhibiting a power flow from the onboard power network 30 to the first battery 60. This power transmission element may particularly comprise a high-capacity diode 64. The first converter 62 may comprise the power transmission element. The power transmission element inhibiting the power flow from the onboard power network 30 to the first battery 60 may be advantageous, since it avoids that the alternator 20 connected to the internal combustion engine 10 charges the first battery 60 and thus burns more fuel.

Another optional advantage may be that a lower cooling power of the alternator 20 of the motor vehicle 1 may be necessary, since alternators 20 used in conventional motor vehicles 1 typically comprise a maximum efficiency below 90%, and an efficiency under 75 % in many operation points of the internal combustion engine. Since the cooling power is provided by the internal combustion engine 10, too, this may optionally advantageously further reduce a fuel consumption of the internal combustion engine 10.

The first battery 60 may be configured for being charged with power from the power grid or another power source, such as solar panels on a house. This may be advantageous, since the generation of electrical power provided by the power grid may be more efficient than the provision of electrical power by the alternator 20 of the motor vehicle 1. Also, emissions may optionally advantageously be limited, since power provided by the power grid may be generated in an emission-neutral way.

The motor vehicle may further comprise a connector configured for connecting the first battery 60 to the power grid.

Optionally, the above-described motor vehicle 1 may be built by adapting a conventional motor vehicle, and without or with only few adaptions to a control system of the motor vehicle governing an activity of the alternator 20. Typically, such control systems sense a voltage of the second battery 50, i.e. the starter battery, and take it as an input to a control algorithm. When the second battery 50 is charged above a certain threshold, the control system normally stops charging the battery and limits or stops a power generation of the alternator 20. By providing the power from the first battery 60 to the onboard power network 30, the second battery 50 may be maintained in a charged state until a state of charge of the first battery 60 drops below a lower threshold or a current voltage of the first battery 60 drops below a certain voltage threshold. The first converter 62 may optionally allow for lowering said voltage threshold.

However, when the first battery 60 is empty and cannot be recharged from the power grid, e.g. because the motor vehicle 1 is circulating or because the power grid is offline, then the second battery 50 can be charged by the alternator 20 powered by the internal combustion engine 10 and the motor vehicle 1 may operate like a conventional motor vehicle. Thus, the advantages of the first battery 60 may be maintained.

The motor vehicle 1 of Fig. 2 may optionally advantageously be built from a conventional motor vehicle without considerable changes of built-in components, such as the control structure, as discussed above.

The first battery 60 may be a lithium-ion battery. Energy densities of lithium-ion batteries are indicated in the magnitude of several 100 Wh/kg. The first battery 60 may comprise a significantly higher energy content than the second battery 50. However, the energy content of the first battery 60 may be smaller than an energy content of batteries used for hybrid electric vehicles, since no traction energy is provided by the first battery 60. This may be optionally advantageous as regards a weight of the motor vehicle, space-consumption of the first battery 60 in the motor vehicle 1, and manufacturing efforts necessary for the first battery 60.

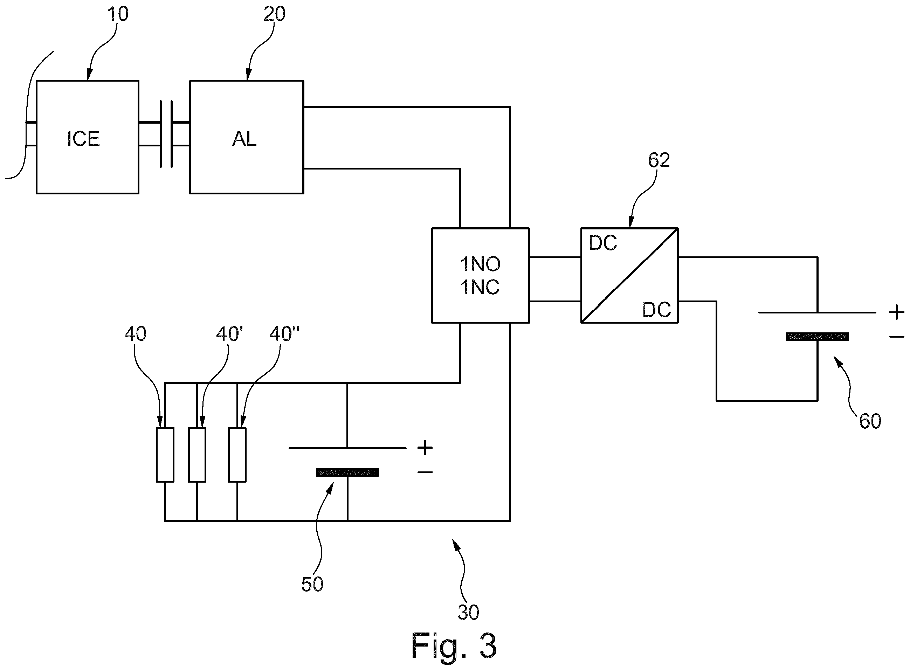

Figure 3 shows an alternative electrical architecture of the conventional motor vehicle equipped with two rechargeable batteries, according to embodiments of the present invention.

The motor vehicle comprises the first battery 60, the second battery 50, the onboard power network 30, the first converter 62, the alternator 20 and the internal combustion engine. The motor vehicle may further comprise features of the motor vehicle in Fig. 2. The motor vehicle comprises a power transmission element configured to connect the alternator 20, the first battery 60, and the onboard power network 30. The power transmission element in Fig. 3 comprises a contactor.

The contactor can for example be a 1NO + 1NC DC contactor. In other words, one portion of the contactor may be normally closed. Another portion of the contactor may be normally open.

The power transmission element may be configured to connect alternator 20 to the onboard power network 30 when a state of charge and/or a voltage level of the first battery 60 is below a certain threshold. The power transmission element may also be configured to connect the first battery 60 to the onboard power network and to separate the alternator 20 from the onboard power network 30 when the internal combustion engine 10 is running and the first battery 60 is in a state where it can provide power to the onboard power network 30.

This may be optionally advantageous, as the power transmission element may thus inhibit a power flow from the onboard power network 30, particularly from at least one of the second battery 50 and the alternator 20, to the first battery 60.

While in the above, a preferred embodiment has been described with reference to the accompanying drawings, the skilled person will understand that this embodiment was provided for illustrative purpose only and should by no means be construed to limit the scope of the present invention, which is defined by the claims.

Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

### Numbered reference signs

- 1: motor vehicle
- 10: internal combustion engine
- 20: alternator
- 22: second converter
- 30: onboard power network
- 40, 40', 40": electrically powered components
- 50: second battery
- 60: first battery
- 62: first converter
- 64: high-capacity diode

## Claims

1. A set configured to be mounted to a vehicle, wherein the set comprises a first converter (62), a first rechargeable battery (60) and a power transmission element,
wherein the set is configured to be connected to a vehicle onboard power network (30),
wherein the first converter (62) is configured for providing power from the first battery (60) to the onboard power network (30),
wherein the power transmission element is configured to connect the first converter (62) and the vehicle onboard power network (30), and for inhibiting a power flow from the vehicle onboard power network (30) to the first battery (60).

2. The set according to claim 1, wherein the first converter (62) is configured to provide power to the vehicle onboard power network at a voltage higher than a current voltage of the vehicle onboard power network.

3. The set according to any of the preceding claims, wherein the power transmission element is configured for allowing a power flow from the first battery (60), preferably from the first converter (62), to the vehicle onboard power network (30).

4. The set according to any of the preceding claims, wherein the first battery (60) is configured for being charged with electric energy from a power grid.

5. The set according to any of the preceding claims, wherein the first battery (60) is configured for providing power to electrically powered components (40, 40', 40") connected to the vehicle onboard power network (30).

6. A motor vehicle comprising
a combustion engine (10) configured to generate mechanical power,
an alternator (20) configured to convert at least a part of the mechanical power generated by the combustion engine (10) to electric power,
a vehicle onboard power network (30),
electrically powered components (40, 40', 40"),
a second rechargeable battery (50), and
the set according to any one of claims 1 to 5,
wherein the vehicle onboard power network (30) is not configured for providing power for an electric motor configured for propulsion of the vehicle.

7. The motor vehicle according to the preceding embodiment, wherein the motor vehicle further comprises a second converter (22) configured to convert the electric power provided by the alternator (20), wherein the onboard power network (30) electrically connects the second converter (22), the second battery (50) and the electrically powered components (40, 40', 40").

8. The vehicle according to the preceding claim, wherein the first converter (62) is configured for providing power to the vehicle onboard power network at a voltage higher than a voltage at which the second converter (22) provides power to the vehicle power onboard network (30).

9. The motor vehicle according to any one of claims 6 to 8, wherein the vehicle onboard power network (30) is not configured for providing power to the first battery (60).

10. The motor vehicle according to any one of claims 7 to 9, wherein the energy content of the first battery (60) is at least two times higher, preferably at least ten times higher than an energy content of the second battery (50).

11. The motor vehicle according to any one of claims 6 to 10, wherein the vehicle is a passenger car.

12. The set according to any one of claims 1 to 5, wherein the set is configured to be mounted to a motor vehicle with a non-hybrid power train so as to obtain the vehicle according to any one of claims 7 to 11.

13. A method for adapting a motor vehicle, wherein the method comprises mounting a set according to any of claims 1 to 5 and 11 to the motor vehicle.

14. The method according to claim 13, wherein the motor vehicle initially comprises
a combustion engine (10) configured to generate mechanical power,
an alternator (20) configured to convert at least a part of the mechanical power of the combustion engine (10) to electric power,
a vehicle onboard power network (30),
electrically powered components (40, 40', 40"), and
a second battery (50).

15. The method according to any one of claims 13 to 14, wherein the method does not comprise removing and/or replacing the alternator (20) of the motor vehicle.
